# FASCICULE DE BREVET EUROPEEN

(11) **EP 3 230 358 B1**
(45) Date de publication et mention de la délivrance du brevet: **12.09.2018**
(21) Numéro de dépôt: 15817953.1
(22) Date de dépôt: 24.11.2015
(51) Int. Cl.: C08K 5/17, C08K 5/34, C08L 63/00, C08L 95/00

(54) **PROCÉDÉ DE PRÉPARATION D'UN LIANT BITUMINEUX ET SON UTILISATION DANS UN ENROBE**
VERFAHREN ZUR HERSTELLUNG EINES BITUMINÖSEN BINDEMITTELS UND VERWENDUNG DAVON IN EINER BITUMINÖSEN MISCHUNG
PROCESS FOR PREPARING A BITUMINOUS BINDER AND USE THEREOF IN A BITUMINOUS MIX

(30) Priorité: 09.12.2014 FR 1462089
(43) Date de publication de la demande: 18.10.2017
(73) Titulaire: Arkema France, 92700 Colombes (FR)
(72) Inventeur: QUINEBECHE, Sébastien, 27300 Bernay (FR); PALLUAULT, Vincent, 27300 Saint Martin du Tilleul (FR)
(74) Mandataire: Gorintin, Sarah
(86) Numéro de dépôt international: PCT/FR2015/053185
(87) Numéro de publication internationale: WO 2016/092173

(56) Documents cités:
- EP-A1- 0 815 170
- EP-A1- 1 810 996
- US-A- 5 306 750
- US-B2- 8 853 306

## Description

### Domaine de l'invention

L'invention appartient au domaine des liants et enrobés bitumineux et plus précisément aux technologies relatives aux additifs fonctionnels ajoutés au mélange de bitume et d'agrégats pour lui conférer des propriétés physico-chimiques et mécaniques particulières. Plus spécifiquement, l'invention concerne un procédé de préparation d'un liant bitumineux, c'est-à-dire un mélange présentant essentiellement du ou des bitume(s) et un polymère fonctionnel.

L'invention se rapporte également au liant bitumineux directement obtenu par le procédé de préparation ainsi que l'utilisation de ce liant bitumineux pour l'obtention d'un enrobé bitumineux.

### Etat de l'art

L'utilisation du bitume dans la fabrication de matériaux pour applications routières et industrielles est connue de longue date : le bitume est le principal liant hydrocarboné utilisé dans le domaine de la construction routière ou du génie civil.

Le bitume ou asphalte est la portion la plus lourde dans le processus de distillation du pétrole. En raison des différentes origines et procédés de distillation de tels pétroles, le bitume résultant peut avoir une large gamme de propriétés et de caractéristiques. Dans la présente invention, le bitume désigne non seulement le produit du pétrole par distillation directe ou de la distillation de pétrole à des pressions réduites, mais également les produits provenant de l'extraction de goudron et de sables bitumineux, les produits d'oxydation et/ou de fluxage avec des solvants carbones comprenant des paraffines et des cires de tels matériaux bitumineux, ainsi que des bitumes souffles ou semi-souffles, des bitumes synthétiques (tels que ceux décrits par exemple dans FR-A-2853647), des goudrons, des résines de pétrole ou des résines indène-coumarone mélangées avec des hydrocarbures aromatiques et/ou paraffiniques et les mélanges de ceux-ci, les mélanges de tels matériaux bitumineux avec des acides, et autres.

La principale application pour le bitume est dans les enrobés (enrobés bitumineux), dans lesquels le bitume est mélange avec des agrégats qui peuvent être de différentes tailles, formes et natures chimiques. Ces enrobés bitumineux sont utilisés en particulier pour la construction, la réparation et la maintenance des trottoirs, des routes, des autoroutes, des parcs de stationnement ou des pistes d'aéroport et des voies de service et de toute autre surface de roulement. Dans la présente invention, les agrégats comprennent notamment, mais non exclusivement, les agrégats minéraux qui sont le produit de carrières ainsi que d'agrégats récupérés a partir d'enrobes précédents (« Reclaimed Asphalt Pavement », RAP), comme décrit par exemple dans la norme AFNOR XP P98-135, décembre 2001, Asphalt Handbook, MS-4 7ème édition, publiée par l'Asphalt Institute, Etats-Unis), produits a partir de la démolition de bâtiments et leurs mélanges ainsi que des fibres organiques et inorganiques, telles que les fibres de verre, de métal ou de carbone, ainsi que les fibres de cellulose, de coton, de polypropylène, de polyester, de poly(alcool vinylique) et de polyamide.

L'utilisation du bitume dans la fabrication de matériaux pour applications routières et industrielles est connue de longue date : le bitume est le principal liant hydrocarboné (pour lier les agrégats entre eux) utilisé dans le domaine de la construction routière ou du génie civil. Pour pouvoir être utilisé comme liant dans ces différentes applications, le bitume doit présenter certaines propriétés physico-chimiques. Une des propriétés les plus importantes est la dureté du bitume; celle-ci doit être, aux températures d'usage suffisamment élevée pour éviter la formation d'ornières provoquée par le trafic. Une autre caractéristique très importante est la viscosité du bitume; le bitume doit être suffisamment fluide à des températures d'application les moins élevées possibles.

Un moyen pour durcir un bitume est de le souffler. Les bitumes soufflés sont fabriqués dans une unité de soufflage, en faisant passer un flux d'air et/ou d'oxygène à travers un bitume de départ. Cette opération d'oxydation thermique peut être menée en présence d'un catalyseur d'oxydation, par exemple de l'acide phosphorique. Généralement, le soufflage est réalisé à des températures élevées, de l'ordre de 200 à 300°C, pendant des durées relativement longues typiquement comprises entre 30 minutes et 2 heures, en continu ou en batch. Ce procédé de soufflage présente un certain nombre d'inconvénients qui rendent cette technique très souvent rédhibitoire.

Un autre moyen pour durcir un bitume, ou pour modifier ses propriétés mécaniques, consiste à lui ajouter des polymères. Ces polymères permettent notamment d'améliorer la cohésion du liant, d'améliorer les propriétés élastiques du liant, d'augmenter l'intervalle de plasticité du bitume, d'augmenter la résistance à la déformation et aussi d'augmenter la dureté du bitume par la diminution de sa pénétrabilité et sa susceptibilité thermique, ainsi que l'amélioration de ses propriétés rhéologiques. Aux températures d'usage, ces caractéristiques sont donc nettement améliorées, ce qui aura pour effet de réduire voire supprimer les risques de fissuration et d'orniérage, d'où il découle des frais d'entretien et de maintenance très significativement réduits. En outre, grâce à cette modification polymère, il est possible de mettre en oeuvre des rubans routiers beaucoup plus fins qu'avec du bitume non-modifié, tout en présentant des performances mécaniques supérieures.

A l'heure actuelle, la technologie courante pour introduire ces additifs polymères suit les étapes suivantes. Tout d'abord, dans une première étape, les additifs polymères sont ajoutés à l'ensemble du bitume nécessaire, ou quasiment, pour réaliser l'enrobé bitumineux (final), ce qui constitue un mélange identifié en tant que « liant bitumineux », puis dans une deuxième étape, les agrégats, avec éventuellement un complément de bitume, sont ajoutés à ce bitume modifié pour former l'enrobé bitumineux.

Un certains nombre de polymère ont été utilisés comme additifs pour la composition de liants bitumeux mais il est apparu qu'un composant particulier, à savoir un terpolymère EDA-GMA (Ethylène - Dérivés Acrylates - Méthacrylate de Glycidyle) présente un intérêt pour certaines propriétés. Les documents EP 0815170 et US 5306750 divulguent l'utilisation de terpolymères Ethylène - Acrylate de Butyle - Méthacrylate de Glycidyle.

De façon classique, les additifs polymères sont incorporés au bitume lors d'une étape d'additivation à une température comprise entre 120 et 220°C. Dans le cas des polymères réactifs fonctionnalisés par des groupements époxy, la réalisation du liant bitumineux s'opère en deux étapes. Tout d'abord, le ou les polymères sont mélangés avec le bitume pendant environ deux heures à une température comprise entre 160°C et 180°C. On obtient alors un mélange désigné en tant que « bitume additivé » dans lequel le polymère est présent de façon homogène dans le bitume. A cette étape intermédiaire fait suite une étape de maturation qui va consister à faire réagir le ou les polymères avec le bitume afin d'obtenir un ensemble cohérent et lié et non plus un simple mélange (homogène).

Deux techniques de maturation sont connues à l'heure actuelle de l'homme du métier.

Une première technique de maturation consiste en une maturation lente, sans ajout d'autre additif. Cette maturation a lieu à une température de 180-190°C pendant 12 à 24 heures, ce qui en fait un cycle de fabrication beaucoup trop long et non adapté aux contraintes industrielles.

Une deuxième technique de maturation consiste en une maturation avec adjuvant acide, plus particulièrement réalisée à l'aide d'un acide polyphosphorique. Cette maturation a lieu à une température comprise entre 160°C et 190°C pendant 30 à 80 minutes, ce qui en fait un temps de cycle acceptable. A titre d'exemple, le document EP 0837910 divulgue une telle technique de maturation avec un adjuvant acide.

Néanmoins, la viscosité du liant bitumineux obtenu par cette technique de maturation est particulièrement élevée, voire très élevée. Or, la viscosité est une propriété essentielle d'un liant bitumineux en raison du fort intérêt pour l'usage du produit final (enrobé bitumineux). Autrement dit, la viscosité du liant bitumineux est déterminante non seulement pour son emploi mais également pour réaliser un enrobé bitumineux présentant des qualités/propriétés satisfaisantes.

En effet, la viscosité du liant bitumineux est cruciale lors du transfert dans les tuyaux et canalisations, à savoir pour les opérations de pompage et de répandage du liant bitumineux sur les agrégats (pour former l'enrobé bitumineux). Par ailleurs, lors de l'utilisation sur chantier, outre la nécessité du répandage du liant bitumineux, la viscosité du liant bitumineux est également un facteur déterminant pour la qualité de l'enrobé bitumineux : la viscosité du liant bitumineux doit être idéale de manière à bien enrober et imprégner les agrégats. Cette dernière condition est déterminante pour la qualité et les propriétés de l'enrobé bitumineux.

En outre, les performances mécanique et thermomécanique (retour élastique et Température Bille-Anneau), même si elles sont satisfaisantes, ne sont pas forcément optimums avec ce procédé de maturation à adjuvant acide et donc ne satisfont pas un cahier technique exigeant (autrement dit des conditions d'environnement rigoureuses).

### Brève description de l'invention

De façon surprenante, la demanderesse a découvert, en contradiction avec les enseignements de l'art antérieur, qu'il est possible de préparer un liant bitumineux avec un adjuvant basique. Qui plus est, en choisissant un adjuvant basique, de préférence d'une nature spécifique, on obtient un liant bitumineux présentant des propriétés de viscosité optimales pour les différents usages du liant et de l'enrobé, tout en préservant des qualités et propriétés mécanique et thermomécanique très satisfaisantes (retour élastique, température bille-anneau, pénétrabilité).

La présente invention concerne ainsi un procédé de préparation d'un liant bitumineux, destiné à être utilisé pour former un enrobé bitumineux, comportant une mise en contact, sous agitation pendant au moins dix minutes, de bitume(s) avec au moins un polymère oléfinique porteur d'au moins un groupement fonctionnel époxy, ledit polymère représentant entre 0,01 % et 20 % en poids du mélange bitume-polymère,
caractérisé en ce qu'on ajoute au mélange bitume-polymère un adjuvant basique consistant en un composé basique, choisi parmi un imidazole ou une amine tertiaire présentant trois radicaux alkyles, apte favoriser une liaison chimique entre le bitume et le polymère oléfinique porteur d'au moins un groupement fonctionnel époxy, ledit adjuvant représentant entre 0,01 % et 5 % en poids du mélange bitume-polymère.

On entend par l'expression « adjuvant basique » un composé basique efficace pour favoriser une liaison chimique entre le bitume et le polymère oléfinique porteur d'au moins un groupement fonctionnel époxy. Cet adjuvant basique peut être choisi parmi les imidazoles et les amines tertiaires.

Cet adjuvant basique peut consister en une base de Lewis ou de Brönsted, de préférence en une base de Lewis.

D'autres caractéristiques ou modes de réalisation de l'invention sont présentées ci-après :
- avantageusement, l'adjuvant basique représente entre 0,1 % et 1 % en poids du mélange bitume-polymère.
- avantageusement, au moins deux radicaux alkyle consistent en des chaînes carbonées présentant au moins 6 atomes de carbone et au plus 16 atomes de carbone.
- avantageusement, la quantité du susdit polymère oléfinique représente entre 0,05 % et 10 %, plus préférentiellement entre 0,1 % et 5 % du mélange bitume-polymère (liant bitumineux).
- de préférence, le susdit terpolymère consiste en un terpolymère d'éthylène/(méth)acrylate d'alkyle/(méth)acrylate de glycidyle, ayant de 0,1% à 65% en poids de (méth)acrylate d'alkyle dont l'alkyle comporte de 1 à 10 carbones et jusqu'à 12% en poids de (méth)acrylate de glycidyle

L'invention présente notamment l'avantage principal de présenter une viscosité du liant bitumineux tout à fait idéal, tant pour les opérations de transfert dans les tuyaux/canalisations que pour les opérations destinées *in situ* à former l'enrobé bitumineux. Les propriétés mécaniques et thermomécaniques de l'enrobé bitumineux sont par ailleurs et en conséquence excellentes et optimales.

La présente invention se rapporte également à un liant bitumineux, directement obtenu selon l'une quelconque des revendications précédentes, comportant du ou des bitume(s) et au moins un polymère oléfinique porteur d'au moins un groupement fonctionnel époxy, ledit polymère représentant entre 0,01 % et 20 % en poids du mélange bitume-polymère, caractérisé en ce qu'il comprend en outre un adjuvant basique consistant en un composé basique apte à favoriser une liaison chimique entre le bitume et le polymère oléfinique porteur d'au moins un groupement fonctionnel époxy, ledit adjuvant représentant entre 0,01 % et 5 % en poids, de préférence entre 0,1 % et 1 % en poids, du mélange bitume-polymère.

De préférence, l'adjuvant basique consiste en une amine tertiaire, présentant trois radicaux alkyles, de préférence dont au moins deux radicaux alkyle consistent en des chaînes carbonées présentant au moins 6 atomes de carbone et au plus 16 atomes de carbone, ou en un imidazole.

Enfin, l'invention se rapporte à l'utilisation du liant bitumineux défini ci-dessus pour la préparation d'un enrobé bitumineux comportant des agrégats et ledit liant bitumineux, ce dernier représentant entre 0,1 % et 15 % en poids de l'enrobé bitumineux, de préférence entre 2 % et 6 % en poids de l'enrobé bitumineux.

La description qui va suivre est donnée uniquement à titre illustratif et non limitatif.

### Description détaillée de l'invention

S'agissant du bitume, cet élément peut consister en tout élément entrant dans la définition ou sous l'appellation de bitume tel que l'homme du métier peut l'appréhender sans effort excessif.

S'agissant du polymère oléfinique porteur d'au moins un groupement fonctionnel époxy, il peut s'agir de préférence d'un copolymère d'une alpha oléfine comprenant au moins un époxyde insaturé et/ou au moins un ester d'acide carboxylique insaturé.

L'époxyde insaturé peut être choisi parmi:
- les esters et éthers de glycidyle aliphatiques tels que l'allylglycidyléther, le vinylglycidyléther, le maléate et l'itaconate de glycidyle, l'acrylate et le méthacrylate de glycidyle, et
- les esters et éthers de glycidyle alicycliques tels que le 2 cyclohexène-1-glycidyléther, le cyclohexène-4,5-diglycidylcarboxylate, le cyclohexène-4-glycidyl carboxylate, le 5-norbornène-2-méthyl-2-glycidyl carboxylate et l'endocis-bicyclo(2,2,1)-5-heptène-2,3-diglycidyl dicarboxylate.

Avantageusement, on utilise le (méth)acrylate de glycidyle.

L'ester d'acide carboxylique insaturé peut être par exemple un (méth)acrylate d'alkyle, le groupement alkyle pouvant avoir jusqu'à 24 atomes de carbone.

Des exemples d'acrylate (ou méthacrylate) d'alkyle utilisables sont notamment le l'acrylate de méthyle, l'acrylate d'éthyle, l'acrylate de n-butyle, l'acrylate d'isobutyle, l'acrylate de 2-éthylhexyle.

L'alpha oléfine peut être l'éthylène, le propylène, le 1-butène, l'isobutène, le 1-pentène, le 1-hexène, le 1-décène, le 4-méthyl-1-butène, le 4,4-diméthyl-1-pentène, le vinylcyclohexane, le styrène, le méthylstyrène, le styrène substitué avec des alkyls. Avantageusement, on utilise l'éthylène.

L'époxyde insaturé peut être greffé ou copolymérisé avec l'alpha oléfine et l'ester d'acide carboxylique insaturé. On préfère la copolymérisation.

Avantageusement, le polymère oléfinique est un copolymère éthylène / (méth)acrylate d'alkyle dont l'alkyle a de 1 à 10 carbones / (méth)acrylate de glycidyle et contenant jusqu'à 65% en poids de (méth)acrylate et jusqu'à 12% en poids d'époxyde.

La préparation du liant bitumineux avec le procédé de maturation selon la présente invention est réalisée d'une manière très similaire à celle selon l'art antérieur, avec un adjuvant acide, avec la seule différence que ce dernier est remplacé par un adjuvant basique, plus précisément une base efficace pour favoriser une liaison chimique entre le bitume et le polymère oléfinique porteur d'au moins un groupement fonctionnel époxy. Cet adjuvant basique peut être plus particulièrement choisi parmi les imidazoles et les amines tertiaires. Il suffit à l'homme du métier d'utiliser ses connaissances quant à la maturation par voie acide ou de suivre les indications données par exemple dans le document EP 0837910 en remplaçant l'adjuvant acide par un adjuvant basique selon la présente invention.

Ainsi, pour réaliser un enrobé bitumineux selon l'invention, le ou les thermoplastiques sont incorporés dans un premier temps au bitume lors d'une étape d'additivation à une température comprise entre 120 et 220°C et plus classiquement comprise entre 160 et 190°C.

Dans une seconde étape, la maturation est réalisée pour atteindre les propriétés optimums. Cette maturation selon l'invention, à savoir avec adjuvant basique, est réalisée de façon similaire à la maturation avec adjuvant acide, bien connue de l'homme du métier, plus précisément en chauffant le milieu à environ 160°C pendant 75 minutes ; la quantité d'adjuvant basique introduite pouvant varier de 0,01% à 5% en poids du liant bitumineux, préférentiellement entre 0,1% et 1% en poids du liant bitumineux.

Ensuite, l'étape pour réaliser un enrobé bitumineux est bien connue de l'homme du métier et consiste essentiellement en l'ajout d'agrégats représentant plus de 80% du poids total de l'enrobé, préférentiellement plus de 90% du poids de l'enrobé. L'ensemble liant-agrégats est mélangé à chaud pendant une durée variable en fonction des conditions d'environnement, de sorte que l'enrobé bitumineux final soit le plus homogène possible.

Des enseignements concernant la préparation du bitume modifié (liant + bitume), puis de l'enrobé bitumeux (liant + bitume + agrégats), peuvent être trouvés dans la littérature, notamment dans le volume « Polymer modified bitumen: Properties and characterisation » édité par Tony McNally, Queen's University Belfast (édition septembre 2011).

### Obtention des formulations des compositions testées :

Les liants bitumineux ont été préparés dans un réacteur régulé en température et équipé d'un système d'agitation mécanique. Chaque préparation permet la réalisation de 1 kilogramme de liant bitumeux. L'étape d'additivation est tout d'abord réalisée à une température de 180°C par incorporation des thermoplastiques dans un bitume non additivé. La vitesse d'agitation est de 400 rpm et la durée du mélange est de 2 heures et 30 minutes. L'étape de maturation par voie basique est ensuite réalisée à une température de 160-170°C après ajout de l'adjuvant basique (0,2% à 0,3% de l'ensemble bitume + thermoplastiques). La vitesse d'agitation est de 400 rpm et la durée de la maturation est de 75 minutes.

### Tests réalisés :

Dans la suite, les tests réalisés, présentés ici de façon non exhaustive, ont pour but de montrer l'amélioration des propriétés mécaniques et thermomécaniques du liant bitumineux obtenu via le procédé de maturation selon la présente invention versus le même liant bitumineux (même bitume et même polymère(s) utilisés) obtenu par le procédé de maturation selon l'art antérieur, c'est-à-dire le procédé de maturation avec adjuvant acide. On notera que, dans les tests présentés ci-après, la quantité massique du polymère représente toujours la même proportion, soit environ 2 % en poids de la composition.

Pour que ces tests soient probants, il est présenté ici, à nouveau de façon non exhaustive, quatre types d'adjuvants basiques (selon la présente invention) et deux types d'adjuvants acides, tous ces adjuvants étant testés avec un seul et unique polymère classiquement utilisé comme additif dans le bitume.

Dans la suite, les résultats sont présentés sans préciser la nature véritable du bitume mais il a été noté par la demanderesse que ces résultats sont équivalents avec les différents types de bitumes existants sur le marché actuellement, tels que par le « Total Azalt 50/70 » de la société TOTAL®, le « Pénétration Grade 60/70 Bitumen » de la société Engen Petroleum limited®, le « Shell Bitumen 50/70 » de la société Shell® ainsi que le « Lukoil 50/70 Bitumen » de la société Lukoil®.

### Test de viscosité

Les mesures de viscosité sont réalisées à l'aide d'un viscosimètre de type « Viscosimètre Brookfield ». Le dispositif de mesure utilisé est un viscosimètre Brookfield® DVIII. Le principe de la mesure repose sur la mesure du couple (proportionnel à la contrainte de cisaillement) nécessaire pour maintenir constante la vitesse angulaire de rotation (proportionnelle à la vitesse de cisaillement) d'un mobile immergé dans le bitume modifié, et d'en déduire proportionnellement la viscosité de ce dernier.

La mesure s'effectue à l'aide d'un mobile SC4-21 (Norme ISO 2555). Entre 5 à 10 mL (millilitre) de bitume modifié sont introduits dans la chambre de mesure maintenue à 135 °C. Les valeurs données dans les exemples ci-dessous correspondent à une vitesse de rotation du mobile de 20 rpm et sont exprimées en mPa.s (milli Pascal seconde). La précision de la mesure est de ±10 % de la valeur indiquée.

### Test de la Température Bille Anneau

Le point de ramollissement (TBA : Température Bille-Anneau) est la température à laquelle un produit (par exemple bitumeux) atteint un certain degré de ramollissement dans des conditions normalisées.

Pour réaliser la méthode bille anneau EN 1427 (norme européenne, un anneau (à épaulement) en laiton de dimensions définies est rempli du liant bitumeux à tester. Cet anneau ainsi préparé est placé sur son support. Une bille en acier est placée sur la pastille de la prise d'essai au milieu de l'anneau.

Le cadre support est ensuite immergé dans un bain thermostaté. Le liquide du bêcher, normalisé, est l'eau déminéralisée pour un essai de 30 à 80 °C, du glycérol ou de l'huile silicone pour des températures supérieures. Le bain est chauffé pour obtenir une élévation régulière de la température de 5 °C·min⁻¹ ± 0,5 °C. On note la température à l'instant où la matière entourant la bille qui s'est détachée de l'anneau touche la plaque inférieure du support. Cette température est appelée le point de ramollissement bille et anneau ou Température Bille-Anneau.

### Test de retour élastique

Le retour élastique d'un bitume modifié est un indicateur qui permet de caractériser la capacité du liant à retrouver ses caractéristiques géométriques d'origine à la suite d'une déformation. Il est déterminé à l'aide d'un essai de laboratoire utilisant un appareillage similaire à celui de l'essai de ductilité et celui de force-ductilité, appareil communément dénommé « ductilimètre ». Le dispositif de mesure utilisé est un ductilimètre Fröwag® type 1.723.

La mesure se déroule comme décrit selon la Norme NF EN 13398 : après équilibre thermique des éprouvettes disposées dans l'appareil (30 minutes dans un bain d'eau thermostaté à 25°C), celles-ci sont étirées à une vitesse de 50 mm/min (millimètre par minute) pour subir un allongement de 200 mm. Dans les 10 secondes suivant la fin de l'étirage, les éprouvettes sont alors sectionnées dans leur milieu et la longueur de rétrécissement de l'éprouvette est mesurée après 30 minutes. La valeur du retour élastique est le pourcentage de longueur de rétrécissement de l'éprouvette ramené à sa longueur totale. Un taux de retour élastique de 100 % correspondrait à un liant qui recouvrirait entièrement ses dimensions originelles (avant étirage).

### Matières premières des compositions testées :

Lotader® AX8900 : terpolymère d'éthylène, d'acrylate de méthyle (24% poids) et de méthacrylate de glycidyle (8% poids) produit par ARKEMA possédant un MFI (190°C, 2.16 kg mesuré selon ISO 1133) de 6 g/10mn.
Imidazole : 1-méthylimidazole produit par Sigma-Aldrich (dans le tableau ci-après cet adjuvant est désigné par l'expression « Imidazole 1 ») et 1,2-diméthylimidazole produit par Sigma-Aldrich (dans le tableau ci-après cet adjuvant est désigné par l'expression « Imidazole 2 »)
Amine tertiaire : N,N-diméthylbenzylamine produit par Sigma-Aldrich (dans le tableau ci-après cet adjuvant est désigné par l'expression « Amine tertiaire 1 ») et 2,4,6-TRIS(diméthylaminométhylphénol) produit par Sigma-Aldrich (dans le tableau ci-après cet adjuvant est désigné par l'expression « Aminé tertiaire 2 »)

Acide Phosphorique produit par Febex et Acide polyphosphorique PPA116% produit par Febex.

Les liants bitumineux n°1 à n°4 ont été obtenus en suivant le procédé de maturation selon l'invention, chacun utilisant respectivement l'un des adjuvants basiques présentés ci-dessus.

Les liants bitumineux n°5 et n°6 ont été obtenus en suivant le procédé de maturation avec adjuvant acide (selon l'art antérieur), respectivement avec l'acide phosphorique et l'acide polyphosphorique susmentionnés.

### Résultats des tests :

Le liant bitumineux doit présenter certaines caractéristiques avantageuses.

Ici sont reportés de façon non exhaustive les résultats relatifs à un liant bitumineux, préparé suivant le procédé selon la présente invention (exemples n°1 à n°4) ou suivant le procédé selon l'art antérieur (exemples n°5 à n°6). Dans ce cadre, trois caractéristiques ont été plus particulièrement visées, à savoir :
- la viscosité à 135°C du liant bitumineux qui doit idéalement être inférieure à 2000 mPa.s, plus préférentiellement inférieure à 1200 mPa.s ; et
- le retour élastique (%) qui doit être supérieur à 50% et préférentiellement supérieur à 70% ; et
- la température bille-anneau qui doit être supérieure à 45°C et préférentiellement supérieure à 55°C ; et
Le tableau ci-dessous reporte une partie des résultats de tests obtenus par la titulaire. Sous toutes réserves d'interprétation, ces résultats ont permis à la titulaire de définir l'invention telle qu'énoncée dans l'ensemble des revendications annexées.

| Liant bitumineux n° | Viscosité à 135°C (mPA.s) | Retour élastique (%) | Température Bille-Anneau (°C) |
|---|---|---|---|
| 1 (amine tertiaire 1) | 1450 | 77 | 58 |
| 2 (imidazole 1) | 1380 | 76 | 61 |
| 3 (amine tertiaire 2) | 1410 | 74 | 59 |
| 4 (imidazole 2) | 1350 | 75 | 57 |
| 5 (acide phosphorique) | 2390 | 77 | 60 |
| 6 (acide polyphosphorique) | 2450 | 74 | 59 |

Les liants bitumineux (n°1 à n°4) obtenus en suivant le procédé de maturation selon la présente invention, à savoir spécifiquement en utilisant un adjuvant basique, présentent des résultats équivalents par rapport aux liants de l'art antérieur (liants n°5 et n°6) concernant le test de retour élastique et le test de Température Bille-Anneau.

Outre ces propriétés thermomécaniques non dégradées, les liants bitumineux selon l'invention (n°1 à n°4) présentent des résultats de viscosité très significativement meilleurs que ceux (n°5 et n°6) selon l'art antérieur, à savoir que les liants bitumineux selon l'invention sont bien moins visqueux que ceux de l'art antérieur.

## Revendications

1. Procédé de préparation d'un liant bitumineux, destiné à être utilisé pour former un enrobé bitumineux, comportant une mise en contact, sous agitation pendant au moins dix minutes, de bitume(s) avec au moins un polymère oléfinique porteur d'au moins un groupement fonctionnel époxy, ledit polymère représentant entre 0,01 % et 20 % en poids du mélange bitume-polymère,
**caractérisé en ce qu'**on ajoute au mélange bitume-polymère un adjuvant basique consistant en un composé basique, choisi parmi un imidazole ou une amine tertiaire présentant trois radicaux alkyles, apte favoriser une liaison chimique entre le bitume et le polymère oléfinique porteur d'au moins un groupement fonctionnel époxy, ledit adjuvant représentant entre 0,01 % et 5 % en poids du mélange bitume-polymère.

2. Procédé selon la revendication 1, **caractérisé en ce que** l'adjuvant basique représente entre 0,1 % et 1 % en poids du mélange bitume-polymère.

3. Procédé selon la revendication 1 ou 2, **caractérisée en ce qu'**au moins deux radicaux alkyle consistent en des chaînes carbonées présentant au moins 6 atomes de carbone et au plus 16 atomes de carbone.

4. Procédé selon l'une quelconque des revendications précédentes, **caractérisé en ce que** la quantité du susdit polymère oléfinique représente entre 0,05 % et 10 % en poids, plus préférentiellement entre 0,1 % et 5 % en poids, du mélange bitume-polymère (liant bitumineux).

5. Procédé selon l'une quelconque des revendication précédentes, **caractérisé en ce que** le susdit polymère consiste en un terpolymère d'éthylène/(méth)acrylate d'alkyle/(méth)acrylate de glycidyle, ayant de 0,1% à 65% en poids de (méth)acrylate d'alkyle dont l'alkyle comporte de 1 à 10 carbones et jusqu'à 12% en poids de (méth)acrylate de glycidyle.

6. Liant bitumineux, directement obtenu selon l'une quelconque des revendications précédentes, comportant du ou des bitume(s) et au moins un polymère oléfinique porteur d'au moins un groupement fonctionnel époxy, ledit polymère représentant entre 0,01 % et 20 % en poids du mélange bitume-polymère,
**caractérisé en ce qu'**il comprend en outre un adjuvant basique consistant en un composé basique apte à favoriser une liaison chimique entre le bitume et le polymère oléfinique porteur d'au moins un groupement fonctionnel époxy, ledit adjuvant représentant entre 0,01 % et 5 % en poids, de préférence entre 0,1 % et 1 % en poids, du mélange bitume-polymère.

7. Liant bitumineux selon la revendication 6, **caractérisé en ce que** l'adjuvant basique consiste en une amine tertiaire, présentant trois radicaux alkyles, de préférence dont au moins deux radicaux alkyle consistent en des chaînes carbonées présentant au moins 6 atomes de carbone et au plus 16 atomes de carbone, ou en un imidazole.

8. Utilisation du liant bitumineux selon l'une des revendications 6 ou 7 pour la préparation d'un enrobé bitumineux comportant des agrégats et ledit liant bitumineux, ce dernier représentant entre 0,1 % et 15 % en poids de l'enrobé bitumineux, de préférence entre 2 % et 6 % en poids de l'enrobé bitumineux.

## Patentansprüche

1. Verfahren zur Herstellung eines bituminösen Bindemittels, das dazu bestimmt ist, zur Bildung eines Asphaltmischguts verwendet zu werden, wobei es das Inkontaktbringen von Bitumen(sorten), über einen Zeitraum von mindestens zehn Minuten unter Rühren, mit mindestens einem olefinbasierten Polymer aufweist, wobei das Polymer mit mindestens einer funktionellen Epoxygruppe versehen ist und zwischen 0,01 % und 20 % nach Gewicht der Bitumen/Polymer-Mischung ausmacht.
**dadurch gekennzeichnet, dass** der Bitumen/Polymer-Mischung ein basisches Additiv zugesetzt wird, welches aus einer basischen Verbindung besteht, die aus einem Imidazol oder einem tertiären Amin mit drei Alkylresten ausgewählt ist, wobei sie dazu befähigt ist, eine chemische Bindung zwischen dem Bitumen und dem olefinbasierten Polymer, welches mit mindestens einer funktionellen Epoxygruppe versehen ist, zu begünstigen, wobei das Additiv zwischen 0,01 und 5 % nach Gewicht der Bitumen/Polymer-Mischung ausmacht.

2. Verfahren nach Anspruch 1, **dadurch gekennzeichnet, dass** der basische Hilfsstoff zwischen 0,1 % und 1 % nach Gewicht der Bitumen/Polymer-Mischung ausmacht.

3. Verfahren nach Anspruch 1 oder 2, **dadurch gekennzeichnet, dass** mindestens zwei Alkylreste aus Kohlenstoffketten bestehen, die mindestens 6 Kohlenstoffatome und höchstens 16 Kohlenstoffatome aufweisen.

4. Verfahren nach einem beliebigen der vorhergehenden Ansprüche, **dadurch gekennzeichnet, dass** die Menge des oben genannten olefinbasierten Polymers zwischen 0,05 % und 10 % nach Gewicht, mit größerem Vorzug zwischen 0,1 % und 5 % nach Gewicht, der Bitumen/Polymer-Mischung (bituminöses Bindemittel) ausmacht.

5. Verfahren nach einem beliebigen der vorhergehenden Ansprüche, **dadurch gekennzeichnet, dass** das oben genannte Polymer aus einem Ethylen/Alkyl(meth)acrylat/Glycidyl(meth)acrylat-Terpolymer besteht, welches 0,1 % bis 65 % nach Gewicht an Alkyl(meth)acrylat, wobei das Alkyl desselben 1 bis 10 Kohlenstoffatome aufweist, sowie bis zu 12 % nach Gewicht an Glycidyl(meth)acrylat aufweist.

6. Bituminöses Bindemittel, das unmittelbar nach einem beliebigen der vorhergehenden Ansprüche erhalten wird, wobei es Bitumen(sorten) und mindestens ein olefinbasiertes Polymer aufweist, wobei das Polymer mit mindestens einer funktionellen Epoxygruppe versehen ist und zwischen 0,01 % und 20 % nach Gewicht der Bitumen/Polymer-Mischung ausmacht,
**dadurch gekennzeichnet, dass** es darüber hinaus ein basisches Additiv umfasst, das aus einer basischen Verbindung besteht, die dazu befähigt ist, eine chemische Bindung zwischen dem Bitumen und dem olefinbasierten Polymer, welches mit mindestens einer funktionellen Epoxygruppe versehen ist, zu begünstigen, wobei das Additiv zwischen 0,01 und 5 % nach Gewicht, vorzugsweise zwischen 0,1 % und 1 % nach Gewicht, der Bitumen/Polymer-Mischung ausmacht.

7. Bituminöses Bindemittel nach Anspruch 6, **dadurch gekennzeichnet, dass** das basische Additiv aus einem tertiären Amin mit drei Alkylresten, wobei vorzugsweise mindestens zwei Alkylreste davon aus Kohlenstoffketten bestehen, die mindestens 6 Kohlenstoffatome und höchstens 16 Kohlenstoffatome aufweisen, oder aus einem Imidazol besteht.

8. Verwendung des bituminösen Bindemittel nach einem der Ansprüche 6 oder 7 zur Herstellung eines Asphaltmischguts, welches Gesteinskörnungen und das bituminöse Bindemittel aufweist, wobei letzteres zwischen 0,1 % und 15 % nach Gewicht des Asphaltmischguts, vorzugsweise zwischen 2 % und 6 % nach Gewicht des Asphaltmischguts, ausmacht.

## Claims

1. A process for preparing a bituminous binder, which is intended to be used for forming a bituminous coating, comprising the placing in contact, with stirring for at least 10 minutes, of bitumen(s) with at least one olefinic polymer bearing at least one epoxy functional group, said polymer representing between 0.01% and 20% by weight of the bitumen-polymer blend,
**characterized in that** a basic adjuvant is added to the bitumen-polymer blend, this adjuvant consisting of a basic compound chosen from an imidazole or a tertiary amine bearing three alkyl radicals, which is capable of promoting chemical bonding between the bitumen and the olefinic polymer bearing at least one epoxy functional group, said adjuvant representing between 0.01% and 5% by weight of the bitumen-polymer blend.

2. The process according to claim 1, **characterized in that** the basic adjuvant represents between 0.1% and 1% by weight of the bitumen-polymer blend.

3. The process according to claim 1 or 2, **characterized in that** at least two alkyl radicals consist of carbon-based chains bearing at least 6 carbon atoms and at most 16 carbon atoms.

4. The process according to any one of the preceding claims, **characterized in that** the amount of the abovesaid olefinic polymer represents between 0.05% and 10% by weight and more preferentially between 0.1% and 5% by weight of the bitumen-polymer blend (bituminous binder).

5. The process according to any one of the preceding claims, **characterized in that** the abovesaid polymer consists of an ethylene/alkyl (meth)acrylate/glycidyl (meth)acrylate terpolymer, containing from 0.1% to 65% by weight of alkyl (meth)acrylate whose alkyl comprises from 1 to 10 carbons and up to 12% by weight of glycidyl (meth)acrylate.

6. A bituminous binder, which is obtained directly according to any one of the preceding claims, comprising bitumen(s) and at least one olefinic polymer bearing at least one epoxy functional group, said polymer representing between 0.01% and 20% by weight of the bitumen-polymer blend,
**characterized in that** it also comprises a basic adjuvant consisting of a basic compound that is capable of promoting chemical bonding between the bitumen and the olefinic polymer bearing at least one epoxy functional group, said adjuvant representing between 0.01% and 5% by weight and preferably between 0.1% and 1% by weight of the bitumen-polymer blend.

7. The bituminous binder according to claim 6, **characterized in that** the basic adjuvant consists of a tertiary amine, bearing three alkyl radicals, of which preferably at least two alkyl radicals consist of carbon-based chains containing at least 6 carbon atoms and at most 16 carbon atoms, or of an imidazole.

8. The use of the bituminous binder according to any of claims 6 or 7, for the preparation of a bituminous coating comprising aggregates and said bituminous binder, said binder representing between 0.1% and 15% by weight of the bituminous coating, preferably between 2% and 6% by weight of the bituminous coating.
